# EUROPEAN PATENT APPLICATION

(11) **EP 0 753 483 A1**
(43) Date of publication of application: **15.01.1997**
(21) Application number: 95304799.0
(22) Date of filing: 10.07.1995
(51) Int. Cl.: C01B 39/02, C01B 39/38, C01B 39/30, B01J 29/06, B01J 29/40, B01J 29/50

(54) **Zeolites and processes for their manufacture**

(71) Applicant: EXXON CHEMICAL PATENTS INC., Linden New Jersey 07036 (US)
(72) Inventor: Verduijn, Johannes Petrus, 3061 Leefdaal (BE)
(74) Representative: Darby, David Thomas

(57) **Abstract**

The use of colloidal zeolite seeds in a zeolite synthesis mixture obviates the need for an organic template.

## Description

This invention relates to zeolites, to processes for their manufacture, and the use of the zeolites as catalysts, carriers, and adsorbents.

Processes for the manufacture of numerous types of zeolites involve the preparation of a synthesis mixture which contains, in addition to sources of inorganic elements, which form the skeleton of the final zeolite, an organic structure-directing agent, or template, which facilitates the formation of the desired zeolite. In many syntheses, the presence of a given template is essential to the manufacture of pure product of the desired structure and, in a relatively small number of cases, a given synthesis mixture will produce different zeolites depending on the identity of the template.

For example, a traditional Offretite synthesis employs a mixture containing the tetramethylammonium (TMA) cation. Since, however, disposal of organic residues from manufacturing processes is becoming increasingly difficult or expensive, it would be desirable to have a process for Offretite manufacture in which the need for an organic template or structure directing agent was obviated. Such a procedure would also have advantages in ease of handling the synthesis mixture, and could avoid the need for calcining to remove the template.

Similarly, zeolite ZSM-5 is typically prepared from a synthesis mixture containing tetrapropylammonium cations as template, as described, for example, in WO 93/08124. As disclosed in that reference, very small proportions of seed crystals of particle size less than 100 nm, sufficiently small to enable them to be added in the form of a colloidal suspension, facilitate the control of product size and improve size uniformity. The seed crystals are prepared as described in WO 93/08125, and the disclosures of both these International applications are incorporated herein by reference.

The present invention is based on the observation that the presence of colloidal seeds in a zeolite synthesis mixture obviates the need for an organic structure-directing agent.

The present invention, in a first aspect, accordingly provides a process for the manufacture of a zeolite which comprises forming a synthesis mixture, free from an organic structure directing agent, and having a molar composition appropriate to the zeolite to be manufactured and also containing zeolite seed crystals of maximum dimension at most 100 nm, and subjecting the seed-containing synthesis mixture to hydrothermal treatment for a time and at a temperature sufficient to form the zeolite.

While the seed crystals are of the same structure type as the zeolite to be manufactured, it is not essential that they be of an identical composition.

Although preparations of certain types of zeolites, e.g., ZSM-5, without organic templates are known, a poster presentation entitled "Crystallization of ZSM-5 from the system K₂O:Al₂O₃:SiO₂:H₂O" by B.M. Lowe et al at the 9th International Zeolite Conference confirmed the difficulty of crystallizing the potassium form of the zeolite from inorganic systems, the known ZSM-5 preparations being sodium-based. The present invention, however, is equally applicable to potassium and sodium based ZSM-5 manufacture.

The invention more especially provides a process for the manufacture of an MFI type zeolite, in which the synthesis mixture has a molar composition, calculated in terms of oxides, within the following ranges

| | |
|---|---|
| M₂O:Al₂O₃ | 1 to 3:1 |
| SiO₂:Al₂O₃ | 15 to 80:1 |
| H₂O:Al₂O₃ | 100 to 500:1 |

wherein M is an inorganic monovalent cation, especially potassium or sodium, and wherein the seed crystals are of an MFI type zeolite, especially silicalite.

The invention further provides a process for the manufacture of the zeolite Offretite in which the synthesis mixture has a molar composition, calculated in terms of oxides, within the following ranges

| | |
|---|---|
| M₂O:Al₂O₃ | 1.9 to 2.1:1 |
| SiO₂:Al₂O₃ | 9 to 11:1 |
| H₂O:Al₂O₃ | 140 to 180:1 |

wherein M represents potassium, up to 30% molar per cent of which may be replaced by sodium, and wherein the seed crystals are of Offretite.

As described above, the zeolite produced by the process of the invention is primarily an aluminosilicate, and will be described herein as such. It is, however, within the scope of the invention to replace aluminium wholly, though preferably only partly, with gallium, and partly by boron, iron or other trivalent elements, and silicon may similarly be replaced by germanium or phosphorus. It is also within the scope of the invention to include inorganic cations other than potassium and sodium in the synthesis mixture.

The sources of the various elements required in the final product may be any of those in commercial use or described in the literature, as may the preparation of the synthesis mixture.

For example, the source of silicon may be for example, silica powder, a silicate, e.g., an alkali metal silicate, or an aqueous colloidal suspension of silica, for example one sold by E.I. du Pont de Nemours under the trade name Ludox. Ludox HS-40 is a sodium-containing product, while AS-40 contains very little sodium.

The source of aluminium may be, for example, aluminium metal, e.g., in the form of chips, hydrated alumina, or a water-soluble aluminium salt, e.g., aluminium sulphate.

The alkali metal ion source is advantageously the hydroxide.

The seeds are conveniently prepared as described in WO 93/08125.

The synthesis mixture is conveniently prepared by dissolving the aluminium source and alkali metal source in water, adding the silica source, adding the seed crystals, heating to boiling, cooling, and correcting for water loss such that the required molar proportions result.

Hydrothermal treatment is advantageously carried out at a temperature within the range of from 100°C to 200°C, preferably from 140° to 180°C and conveniently at about 150° to 175°C, advantageously for a time within the range of from 20 to 200 hours, preferably within the range of from 50 to 160 hours. Treatment may be carried out statically or with moderate stirring.

It has been found that very small proportions of the colloidal seed crystals are effective to promote crystallization of the desired zeolite. The process may employ very small proportions of colloidal seeds, e.g., from 0.0002 to 0.1%, by weight of the total synthesis mixture, advantageously from 0.001 to 0.08%, and conveniently from 0.01 to 0.075%.

The procedures described above yield zeolites in non-acidic form, that are directly, i.e., without calcination, suitable for use as catalysts for processes requiring non-acidic molecular sieves, e.g., especially those treating hydrocarbons, e.g., cracking, hydrocracking and de-waxing. The Na and K ZSM materials are especially useful for the above purposes. Offretite is useful as a catalyst in numerous hydrocarbon conversions, and is effective in hydrocarbon separations and adsorptions, and is useful as a catalyst base, and especially in aromatization, alkylation, and isomerization.

The invention accordingly further provides the use of colloidal zeolite seeds, especially zeolite seeds of particle size at most 100 nm, in the synthesis of zeolites by hydrothermal treatment of a zeolite synthesis mixture free from organic structure directing agent.

The invention further provides the use of the thus synthesized zeolites either as such, in particulate form, or in the form of a layer on a support, especially as a membrane, as catalyst, catalyst supports or adsorption agents in organic reactions, if desired after cation exchange, washing, or calcination.

The following Examples illustrate the invention:

### Example 1

This example illustrates the seeding of an organic template-free ZSM-5 mixture. A synthesis mixture was prepared using the following components:

| | Parts by Weight |
|---|---|
| Ludox AS-40, 40% SiO₂ by weight in water (Du Pont) | 80.50 |
| KOH pellets, 87.5% wt purity | 10.38 |
| Al₂(SO₄)₃.18H₂O | 8.94 |
| H₂O, deionized | 335.32 |
| Colloidal silicalite suspension, 12.5% wt% in water (prepared as described in WO 93/08125, particle size ≈90 nm) | 0.300 |

The aluminium sulphate and potassium hydroxide were dissolved in 260.54 parts water with boiling until a clear alumina solution resulted. The colloidal seed suspension was added to the colloidal silica solution. The aluminate solution was then added followed by 74.78 parts of water used to rinse the aluminate solution vessel to ensure quantitative transfer and the mixture stirred for 5 minutes. Its molar composition was
1.52 K₂O:0.25 Al₂O₃: 10 SiO₂:404 H₂O
and it contained 0.0070 wt% colloidal seeds.

For comparison purposes, a second synthesis mixture of identical molar proportions was prepared without seeds.

311 g of seeded synthesis mixture were transferred to a stainless steel autoclave which was placed in an oven at room temperature. The oven was heated to 160°C over the course of 2 hours, and maintained at that temperature for 152 hours.

The autoclave contents were then washed six times with 750 ml water to a pH of 9.5. After separation from the wash water by centrifuging, the product was dried overnight at 120°C; the yield was 23.5 g, and the Si:Al₂ atomic ratio was 37.6:1. From X-ray diffraction (XRD) and scanning electron microscopy (SEM) analysis the product was seen to be excellently crystalline and pure ZSM-5, the crystallites being uniform and coffin-shaped with a length of about 2.8 µm.

The unseeded mixture was treated identically to the seeded sample. XRD analysis showed that the product was completely amorphous.

### Example 2

The procedure of Example 1 for forming a synthesis mixture was repeated, using a mixture of molar composition
1.27 K₂O:0.167 Al₂O₃:10 SiO₂:403 H₂O
seeded with 0.0113% colloidal silicalite crystals. The SiO₂:Al₂O₃ molar ratio of the synthesis mixture was about 60:1. 314 g of the mixture were heated in a static stainless steel autoclave for 132 hours at 160°C. After washing 5 times with 750 ml of water, to a pH of 9.7, the product was dried at 125°C, yield 7.2 wt% based on the synthesis mixture. The Si:Al₂ atomic ratio of the product was 55:1. XRD showed an excellently crystalline pure ZSM-5 product, while SEM showed uniform coffin-like crystals with a length of 1.8 µm.

A similar synthesis mixture seeded with 0.0109 wt% silicalite crystals of length 1.0 µm and identically hydrothermally treated yielded an amorphous product.

In order to establish that the beneficial effect of nanometer sized seed crystals is not a result of residual template in the crystals, which could in principle be available as template if some dissolution of the seeds in the synthesis mixture took place, an unseeded synthesis mixture of the same composition to which 12.5 ppm (0.00125%) tetrapropylammonium hydroxide had been added was hydrothermally treated. 12.5 ppm is the calculated template content of 100 ppm uncalcined seed crystals, and represents the maximum content of the synthesis mixture if all the trapped template of 100 ppm seeds were to be released. XRD of the product showed a completely amorphous product.

### Example 3

The procedure of Example 2 was repeated, but using 0.001% (10 ppm) of nanometer-sized seed crystals. The product was again excellently crystalline ZSM-5, indicating that extremely small proportions are effective in preparing organic template-free ZSM-5.

### Example 4

The procedure of Example 2 was repeated, but using a reduced water content, the molar proportion of the synthesis mixture being:
1.27 K₂O:0.167 Al₂O₃:10 SiO₂:203 H₂O

The mixture contained 0.0196% (196 ppm) nanometer-sized silicalite seed crystals. The product was again seen by XRD to be excellently crystalline and pure, SEM showing twinned crystals with a length of about 1.2 µm. The yield, based on the weight of the synthesis mixture, was 13.8 wt%.

### Comparison Example A

In order to establish whether an unseeded synthesis mixture having a higher alkalinity, which normally enhances nucleation, could yield crystalline ZSM-5, an unseeded synthesis mixture of molar composition
2.55 K₂O:0.167 Al₂O₃:10 SiO₂:405 H₂O
i.e., one of twice the alkalinity of the previous mixture, was heated for 132 hours at 160°C.

A completely amorphous product resulted.

### Example 5

In Examples 1 to 4 preparations of K ZSM-5 were described. In this example, Na ZSM-5 is prepared.

In the same way as described in Example 1, but using NaOH instead of KOH, a synthesis mixture of molar composition
1.27 Na₂O:0.167 Al₂O₃:10 SiO₂:404 H₂O
was prepared, seeded with 0.0112 wt% (112 ppm) colloidal silicalite crystals. Heating was at 160°C for 132 hours. After washing to pH 9.4, the product was dried at 105°C. The calculated Si:Al₂ atomic ratio of the product was 53:1, the yield being 6.9%. XRD showed an excellently crystalline and pure product, SEM indicated coffin-like crystals of length about 1.3 µm. An unseeded but otherwise identical synthesis mixture aged under identical conditions gave a completely amorphous product.

### Comparison Example B

The procedure of Comp. Example A was repeated, but using an unseeded sodium hydroxide-based synthesis mixture of molar composition:
2.54 Na₂O:0.166 Al₂O₃:10 SiO₂:405 H₂O
i.e., a molar sodium hydroxide content such as to enhance nucleation. XRD of the product showed a partially crystalline ZSM-5, with no impurity other than unreacted amorphous gel.

### Example 6

This example illustrates the production of colloidal Offretite of particle size below 50 nm and its use in seeding. The synthesis mixture contained the following components.

| | Parts by Weight |
|---|---|
| TMAOH, 25% by weight in water (Fluka) | 108.52 |
| Al chips, 99.99% wt purity (Fluka) | 2.8924 |
| SiO₂ powder, 89.8% wt, 10.2% water (Baker) | 35.52 |
| (It is believed that a small proportion of KOH was present as contaminant in the TMAOH.) | |

The Al chips were dissolved in the TMAOH solution with stirring and gentle heat. After addition of the silica powder, the mixture was heated to boiling with stirring and kept at boiling point for 5 minutes. It was apparent that not all the silica had dissolved, some settling on the base of the glass beaker. The molar composition of the synthesis mixture was:
2.78 (TMA)₂O: 0.47 K₂O:Al₂O₃:9.90 SiO₂:91H₂O

The synthesis mixture was homogenized by vigorous stirring for several minutes, then immediately poured into a plastic bottle which was placed in an oil bath, the open end of the bottle being connected to a reflux condenser. The oil bath was heated to 85°C, and maintained at that temperature over a period. The appearance of the mixture gradually changed, with the quantity of deposited silica reducing, while the mixture developed into a transparent jelly. Heating was terminated after 160 hours.

After washing using a 17500 rpm centrifuge, the product was suspended in the last wash water, a stable, colloidal, suspension resulting. A portion was evaporated to dryness and characterized by XRD and SEM. Although the diffractogram showed weak and broad peaks, the pattern was still recognizable as pure Offretite. The SEM showed that the product consisted of uniformly sized and shaped particles, about 45 nm x 20 nm. XRD analysis of a portion of product calcined in air at 475°C for 20 hours showed essentially no change in crystallinity, evidence of thermal stability.

A further synthesis mixture was prepared using the following components:

| | Parts by Weight |
|---|---|
| KOH pellets, 87.4% wt purity (Baker) | 25.70 |
| Al(OH)₃ powder, 98.5% wt purity (Alcoa) | 15.84 |
| H₂O, deionized | 185.67 |
| Ludox HS-40, 40% SiO₂ by weight in water (Du Pont) | 150.23 |
| Colloidal seed suspension, 5.36 wt% in water | 3.56 |

The potassium hydroxide and hydrated alumina were mixed for a few seconds in a high shear mixer and 75.02 parts water added to dissolve the aluminate. The colloidal silica was diluted with 110.65 parts of water, the colloidal seeds added to the resulting solution, and stirred for 3 minutes. The aluminate solution was then added and the resulting synthesis mixture stirred for 3 further minutes. Its molar composition was
2.00 K₂O:Al₂O₃:10 SiO₂:160 H₂O
and it contained 0.050 wt% colloidal Offretite.

For comparison purposes, a second Offretite synthesis mixture of identical molar proportions was prepared without seeds.

The synthesis mixtures were placed in separate autoclaves, heated to 150°C and maintained at that temperature for 96 hours. The resulting products were washed with water to a pH of 10.5 and dried at 110°C. The yield of the process according to the invention was about 17%, based on the total weight of synthesis mixture.

X-ray diffraction analysis of the product of the seeded process showed the characteristic pattern of Offretite, slightly contaminated with zeolite W, SEM showing rod-like particles of about 2 µm length and 0.0 µm diameter. Thermographic analysis showed a micropore capacity for toluene of 2.86%. The comparison process yielded a mixture of zeolite W and amorphous material.

### Example 7

To reduce the contamination by zeolite W resulting from the process of Example 6, the alkalinity of the synthesis mixture was increased, to give a molar composition of
2.20 K₂O:Al₂O₃:10 SiO₂:60 H₂O
seeding with 0.0502 % colloidal Offretite crystals, other components and reaction conditions being as in Example 9. XRD analysis showed an Offretite product free from zeolite W but now slightly contaminated with zeolite KL. Thermographic analysis showed a micropore capacity for toluene of 3.69%, which confirms the absence of zeolite W.

### Example 8

Example 6 was repeated with a synthesis mixture of the following molar composition:
2.10 K₂O:Al₂O₃: 10 SiO₂:160 H₂O

XRD analysis shows an Offretite product free from both zeolites KL and W.

### Example 9

The procedure of Example 8 was repeated, but using 0.075% by weight Offretite seeds. In a comparison example, a similar synthesis mixture, but with no seeds, was used.

The synthesis mixture seeded with Offretite gave an Offretite product, with no KL or W contamination.

The unseeded mixture gave a largely amorphous product with small proportions of W and KL.

## Claims

1. A process for the manufacture of a zeolite which comprises forming a synthesis mixture, free from an organic structure directing agent, and having a molar composition appropriate to the zeolite to be manufactured and also containing zeolite seed crystals of maximum dimension at most 100 nm, and subjecting the seed-containing synthesis mixture to hydrothermal treatment for a time and at a temperature sufficient to form the zeolite.

2. A process as claimed in claim 1, for the manufacture of an MFI type zeolite, in which the synthesis mixture has a molar composition, calculated in terms of oxides, within the following ranges
| | |
|---|---|
| M₂O:Al₂O₃ | 1 to 3:1 |
| SiO₂:Al₂O₃ | 15 to 80:1 |
| H₂O:Al₂O₃ | 100 to 500:1 |
wherein M is an inorganic monovalent cation, and wherein the seed crystals are of an MFI type zeolite.

3. A process as claimed in claim 2, wherein the seed crystals are of silicalite.

4. A process as claimed in claim 1, for the manufacture of the zeolite Offretite, in which the synthesis mixture has a molar composition, calculated in terms of oxides, within the following ranges
| | |
|---|---|
| M₂O:Al₂O₃ | 1.9 to 2.1:1 |
| SiO₂:Al₂O₃ | 9 to 11:1 |
| H₂O:Al₂O₃ | 140 to 180:1 |
wherein at least 70 molar per cent of M represents potassium, any balance representing sodium, and wherein the seed crystals are of Offretite.

5. A process as claimed in any one of claims 1 to 4, wherein hydrothermal treatment is carried out at a temperature within the range of from 100°C to 200°C.

6. A process as claimed in any one of claims 1 to 5, wherein treatment is carried out for a time within the range of from 20 to 200 hours.

7. A process as claimed in any one of claims 1 to 6, wherein the proportion of seed crystals is within the range of from 0.0002 to 0.1% by weight, based on the weight of synthesis mixture.

8. The use of colloidal zeolite seeds, especially zeolite seeds of particle size at most 100 nm, in the synthesis of zeolites by hydrothermal treatment of a zeolite synthesis mixture free from organic structure directing agent.

9. The product of the process of any one of claims 1 to 7 or of the use of claim 8 in particulate or layer form.

10. The use of the product as claimed in claim 9, or a product as defined in claim 9, if desired or required after washing, cation exchange, or calcining in hydrocarbon conversion, adsorption, or separation.
